# EUROPEAN PATENT APPLICATION

(11) **EP 1 359 751 A2**
(43) Date of publication of application: **05.11.2003**
(21) Application number: 03005833.3
(22) Date of filing: 14.03.2003
(51) Int. Cl.: H04N 5/445

(54) **Digital broadcast receiving apparatus and control method thereof**

(30) Priority: 30.04.2002 JP 2002128820
(71) Applicant: Kabushiki Kaisha Toshiba, Tokyo (JP)
(72) Inventor: Nakamura, Kouichi, Intell Prop., Division, Minato-ku, Tokyo 105-8001 (JP)
(74) Representative: Henkel, Feiler, Hänzel

(57) **Abstract**

Program information is acquired from received digital broadcasting, and the acquired program information is converted to a predetermined format. The converted program information is recorded on an information recording medium (13 to 15) or transferred to a predetermined address. Thereby, positive and effective uses such as conversion of the data format of the program information and transfer to the outside can be achieved.

## Description

The present invention relates to a digital broadcasting reception apparatus which uses, for example, satellite to receive digital television broadcasting, and a control method of the apparatus.

As is well known, in recent years, digital television broadcasting has come into practical use. In digital television broadcasting, in addition to the broadcasting of programs, the presently broadcast program, or information on programs scheduled to be broadcast (hereinafter referred to as program information) is also distributed. Examples of program information include various contents indicating program title, broadcasting station name, recording date, performers, outline, and genre.

Moreover, in a digital broadcasting reception apparatus which receives this digital television broadcasting, when a user performs a predetermined key operation for program information display, it is possible to selectively display the program information with respect to a presently seen/heard program or a program scheduled to be broadcast, which is displayed in an electronic program guide (EPG) on a television screen.

Additionally, for a prior-art digital broadcasting reception apparatus, it is possible to receive the program information for use by displaying it or browsing through it. However, a technique of acquiring the received program information as data, and transferring the data to an external information processing apparatus to positively use the data has not been developed yet under the existing circumstances.

Therefore, for example, when a user records a desired program on recording media, and prepares labels of the recording media, the user is supposed to perform an operation comprising: watching the program information displayed on the screen to manually write down necessary information such as the program title and performers; keying the necessary information into a personal computer and word processor; and printing out the information. In this manner, the user is forced to perform laborious operations.

It is to be noted that in Jpn. Pat. Appln. KOKAI Publication No. 10-340234, a means is disclosed for identifying access to a server site using broadcast information or information recorded on the recording media as a usual access.

Moreover, in Jpn. Pat. Appln. KOKAI Publication No. 2000-287184, another means is disclosed in which code information corresponding to a predetermined pattern superimposed upon an image, and address information corresponding to the code information are stored. When the code information is transmitted via a network, the address information corresponding to the code information is searched and transmitted.

However, in any one of these publications, the above-described technique of acquiring the received program information as data and transferring the data to an external information processing apparatus to achieve the positive use of the information is not described.

It is an embodiment of the present invention to provide a digital broadcasting reception apparatus and control method of the apparatus, in which received program information is acquired as data and positive and effective uses such as conversion of data format and transfer to the outside are achieved.

According to one aspect of the present invention, there is provided a digital broadcasting reception apparatus comprising:
an acquisition unit configured to receive digital broadcasting and to acquire program information; and
a conversion unit configured to convert the program information acquired by the acquisition unit to a predetermined format.

According to another aspect of the present invention, there is provided a control method of a digital broadcasting reception apparatus, comprising:
receiving digital broadcasting to acquire program information;
allowing specific program information to be selected from the acquired program information;
setting a transfer destination of the selected program information; and
converting the program information whose transfer destination is set into a predetermined format.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram schematically showing a digital broadcasting reception system according to one embodiment of the present invention;
FIG. 2 is a block diagram showing details of a digital broadcasting receiver in the embodiment;
FIG. 3 is a flowchart showing a setting operation in transferring program information in the embodiment;
FIGS. 4A to 4C are explanatory views showing one example of a setting screen displayed during a setting operation in transferring the program information in the embodiment;
FIGS. 5A and 5B are explanatory views showing one example of the setting screen displayed during the setting operation in transferring the program information in the embodiment; and
FIG. 6 is a flowchart showing a transfer operation of the program information in the embodiment.

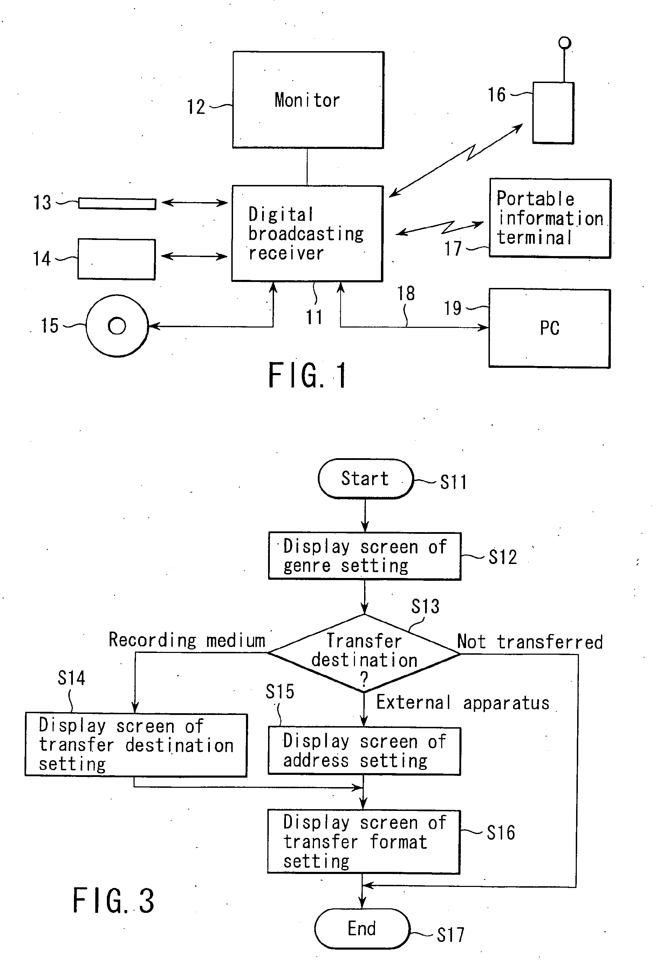

One embodiment of the present invention will be described hereinafter in detail with reference to the drawings. FIG. 1 schematically shows a digital broadcasting reception system to be described in this embodiment. In FIG. 1, reference numeral 11 denotes a digital broadcasting receiver. The digital broadcasting receiver 11 is connected to a monitor 12.

The digital broadcasting receiver 11 restores video and sound of a program included in a received digital broadcasting signal, and outputs the video and sound to the monitor 12 so that the program can be seen and heard. Moreover, the digital broadcasting receiver 11 has a function of restoring program information included in a digital broadcasting signal and displaying the information on the monitor 12.

Here, different types of first and second memory devices 13, 14 include semiconductor memories which are independently attachable/detachable as information recording media with respect to the digital broadcasting receiver 11. Examples of the first and second memory devices 13, 14 include Smart Media (registered trademark), SD Cards (registered trademark), and Memory Sticks (registered trademark).

Moreover, a disk 15 is attachable/detachable as the information recording medium with respect to the digital broadcasting receiver 11. Examples of the disk 15 include a compact disk (CD)-read/write (R/W), CD-recordable (R), digital versatile disk (DVD)-R/W, DVD-R, DVD-random access memory (RAM), magneto-optical (MO), and Floppy Disk (FD) [registered trademark]. It is to be noted that the digital broadcasting receiver 11 also includes a hard disk drive (HDD) (not shown).

Furthermore, for the digital broadcasting receiver 11, a program and program information included in the received digital broadcasting signal can be converted to a desired data format and selectively transferred to and recorded in the first memory device 13, second memory device 14, disk 15, and HDD.

Therefore, when the first memory device 13, second memory device 14, and disk 15 are detached from the digital broadcasting receiver 11 and attached to a peripheral device having another recording/reproducing function, the program information received by the digital broadcasting receiver 11 can be used by another peripheral device.

Moreover, the digital broadcasting receiver 11 uses radio techniques such as Bluetooth to transfer the received program information to a cellular phone 16 and portable information terminal 17 via electronic mail, so that the information can be displayed on the screens. Furthermore, the digital broadcasting receiver 11 transfers the received program information to a personal computer (PC) 19 via electronic mail, for example, through a local area network (LAN) cable 18, so that the information can be displayed on the screen.

It is to be noted that the cellular phone 16, portable information terminal 17, and PC 19 can also edit/process the program information sent from the digital broadcasting receiver 11, and send the information back to the digital broadcasting receiver 11, so that the information can be displayed on the monitor 12.

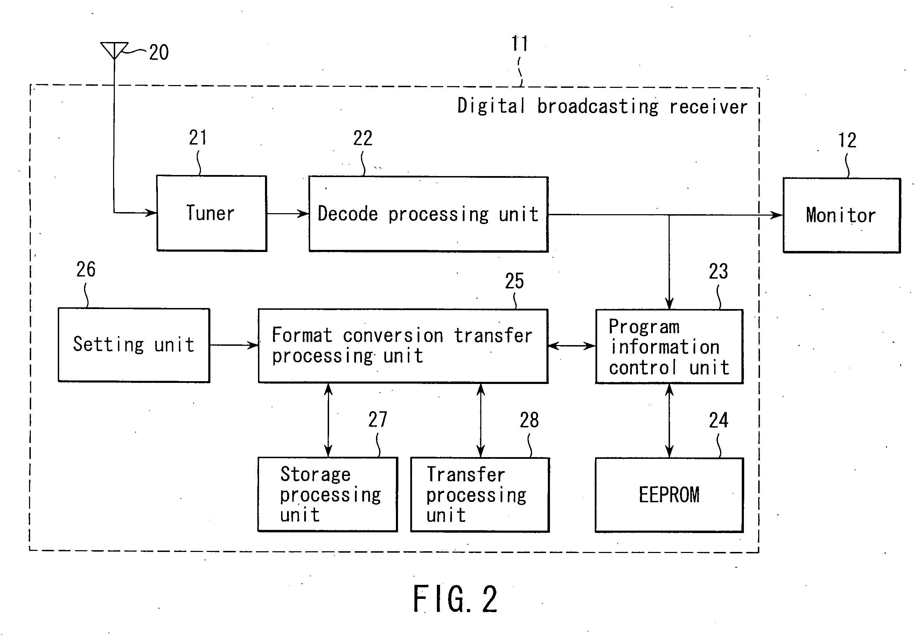

FIG. 2 shows details of the digital broadcasting receiver 11. That is, a digital broadcasting signal received by an antenna 20 is tuned in on a station by a tuner 21, subsequently supplied to a decode processing unit 22, and subjected to a decode processing. Moreover, video and audio signals of the program output from the decode processing unit 22 are supplied to the monitor 12 for a user to see/hear the program.

Moreover, the program information output from the decode processing unit 22 is supplied to program information control unit 23. The program information control unit 23 has a function of writing/reading the input program information with respect to an electrically erasable and programmable read only memory (EEPROM) 24.

Furthermore, the program information control unit 23 has a function of reading the program information written in the EEPROM 24, converting the information into the data format suitable for the display on the monitor 12, and outputting the information to the monitor 12 based on operation information of the user.

Additionally, the program information control unit 23 has a function of reading out the program information written in the EEPROM 24 and outputting the information to a format conversion transfer processing unit 25 based on the operation information of the user.

The format conversion transfer processing unit 25 selectively executes recording format conversion processing for transferring the program information supplied from the program information control unit 23 to the information recording medium to record the information in the medium, and transferring format conversion processing for transferring the information via electronic mail based on information set in a setting unit 26 by a user's operation.

Moreover, the program information subjected to the format conversion processing for recording is selectively transferred to and recorded in the above-described first memory device 13, second memory device 14, disk 15, and HDD via a storage processing unit 27.

Furthermore, the program information subjected to the format conversion processing for transfer is transferred to the above-described cellular phone 16, portable information terminal 17, and PC 19 via a transfer processing unit 28.

It is to be noted that the program information recorded in the first memory device 13, second memory device 14, disk 15, and HDD is supplied to the format conversion transfer processing unit 25 selectively via the storage processing unit 27, subjected to the predetermined format conversion processing, thereafter supplied to the program information control unit 23, and recorded in the EEPROM 24 or displayed on the monitor 12.

Moreover, the program information sent back from the cellular phone 16, portable information terminal 17, and PC 19 is supplied to the format conversion transfer processing unit 25 selectively via the transfer processing unit 28, subjected to the predetermined format conversion processing, supplied to the program information control unit 23, and recorded in the EEPROM 24 or displayed on the monitor 12.

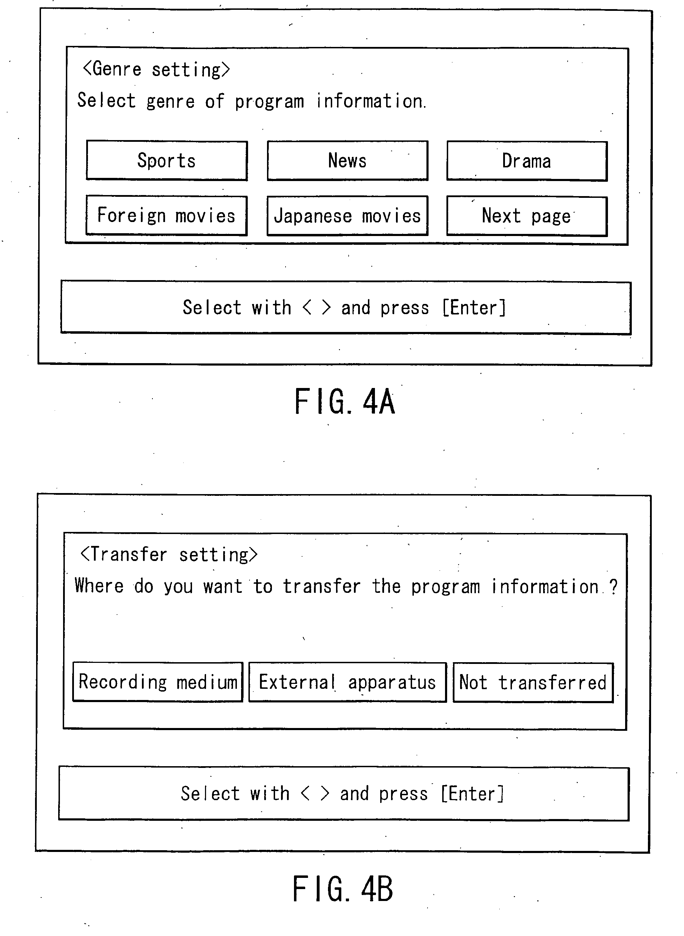

FIG. 3 shows a flowchart of an operation for transferring and recording the program information recorded in the EEPROM 24 into the first memory device 13 and second memory device 14, and an operation for selectively transferring the information to the cellular phone 16, portable information terminal 17, and PC 19.

First, when the operation is started (step S11), the program information control unit 23 displays a screen of genre setting in the monitor 12 in-step S12, and allows a user to set a genre of the program information to be read out from the EEPROM 24.

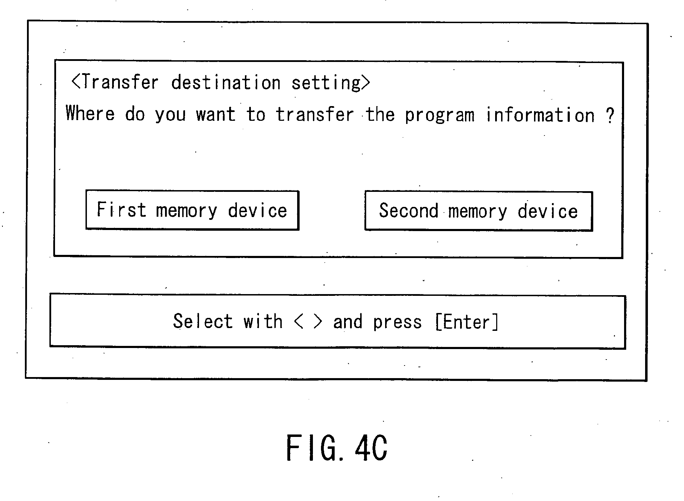

On the screen of the genre setting, as shown in FIG. 4A, a list of a plurality of genres is displayed, and the user selects the necessary genre from this type of screen, for example, by operation of a remote controller.

Next in step S13, the program information control unit 23 displays a screen of transfer setting in the monitor 12 in order to allow the user to select whether the program information is to be transferred to the information recording medium or another external apparatus.

On the screen of the transfer setting, as shown in FIG. 4B, "recording medium", "external apparatus", and "not transferred" are displayed, and the user selects a necessary item from this type of screen, for example, by the operation of the remote controller.

Here, when "not transferred" is selected, the program information control unit 23 ends the processing as such (step S17).

Moreover, when the "recording medium" is selected, in step S14, the program information control unit 23 displays the screen of transfer destination setting in the monitor 12 and allows the user to select the recording medium to which the information is to be transferred.

On the screen of transfer destination setting, as shown in FIG. 4C, "first memory device", "second memory device" are displayed, and the user selects the necessary item from this type of screen, for example, by operation of the remote controller. In this operation example, the disk 15 is omitted, but, needless to say, the disk 15 may also be included in options of the recording medium.

Moreover, when the "external apparatus" is selected in step S13, the program information control unit 23 displays a screen of address setting for allowing the user to input the mail address of the transfer destination in the monitor 12 in step S15.

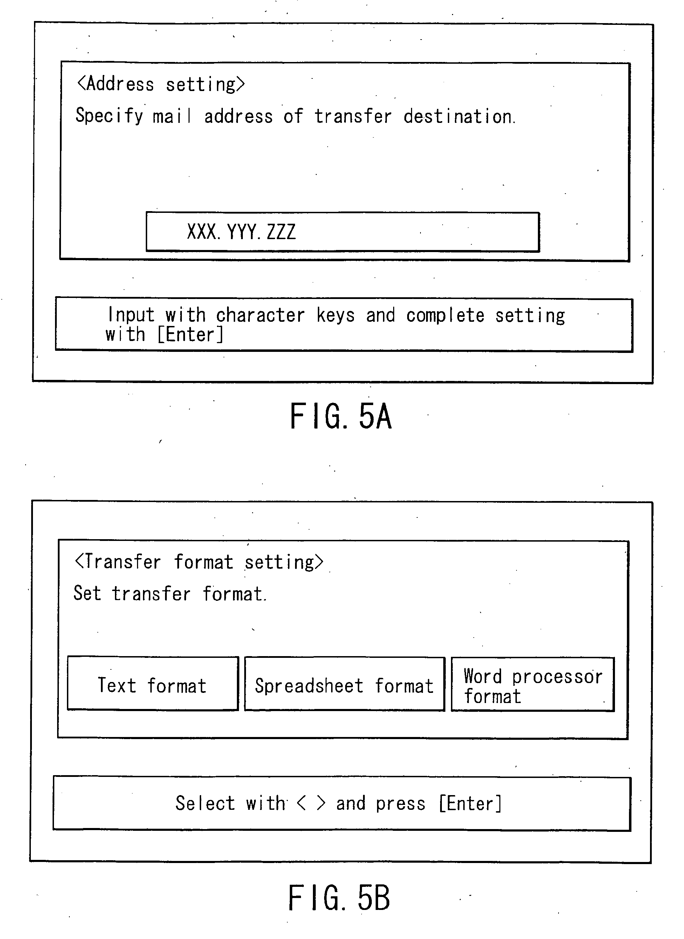

For the screen of address setting, as shown in FIG. 5A, the user operates, for example, character keys of the remote controller to input the mail address into this type of the screen.

Furthermore, after step S14 or S15, the program information control unit 23 displays a screen of transfer format setting for allowing the user to select a transfer format of program information on the monitor 12 in step S16, and the processing ends (step S17).

On the screen of the transfer format setting, as shown in FIG. 5B, "text format", "spreadsheet format", "word processor format", and the like are displayed, and the user selects the necessary item from this type of the screen, for example, by operation of the remote controller.

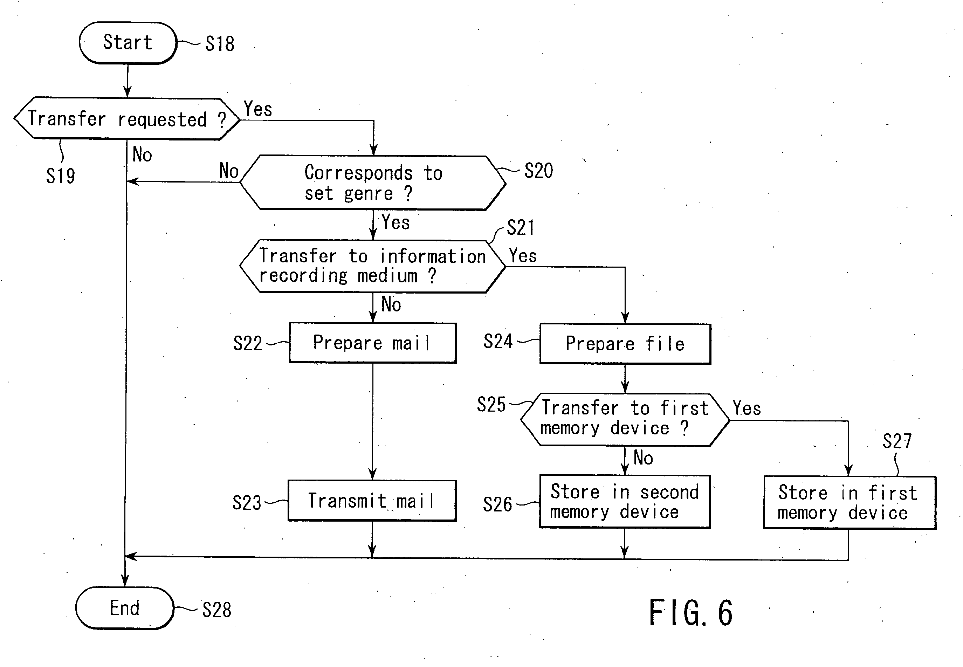

The information such as the genre, transfer destination, address, and transfer format set as described above is recorded in the setting unit 26, and a transfer operation of the program information is executed as shown in a flowchart of FIG. 6 described hereinafter.

First, at the start of the operation (step S18), the program information control unit 23 judges whether or not the transfer of the program information is requested in step S19. It is judged that the transfer is not requested (NO), and the processing ends as such (step S28).

Moreover, it is judged that the transfer of the program information is requested in step S19 (YES), and then the program information control unit 23 judges, in step S20, whether the program information to be transferred corresponds to the set genre. It is judged that the information does not correspond to the genre (NO), and the processing ends as such (step S28).

Furthermore, it is judged that the program information to be transferred corresponds to the set genre in the step S20 (YES). In this case, the program information control unit 23 judges, in step S21, whether or not the set transfer destination is the information recording medium.

Additionally, it is judged that the transfer destination is not the information recordings medium (NO). In this case, the program information control unit 23 judges the transfer to the external apparatus in step S22. The program information to be transferred is written in mail text, or converted to the format corresponding to the transfer format set in the format conversion transfer processing unit 25, and added to the mail as an attachment.

Thereafter, in step S23, the program-information control unit 23 allows the transfer processing unit 28 to transmit the mail to the mail address. Here, the transfer processing of the program information to the external apparatus by the mail is ended (step S28).

Moreover, it is judged in step S21 that the transfer destination of the program information is the information recording medium (YES). In this case, the program information control unit 23 allows the format conversion transfer processing unit 25 to convert the program information to be transferred to a file corresponding to the set transfer format in step S24, and judges whether or not the set transfer destination is the first memory device 13 in step S25.

It is judged that the set transfer destination is not the first memory device 13 (NO). In this case, the program information control unit 23 transfers the file to the second memory device 14 to store the file in the device in step S26. When the set transfer destination is judged to be the first memory device 13 (YES), in step S27 the file is transferred to the first memory device 13 and stored in the device. Here, the recording of the program information in the information recording medium is ended (step S28).

According to the above-described embodiment, -the information recording medium (first memory device 13, second memory device 14, disk 15, and the like) which is attachable/detachable with respect to the digital broadcasting receiver 11 has the function of converting the acquired program information into the desired format and transferring and storing the information, and the function of converting the acquired program information to the desired format and transferring the information to the peripheral device (cellular phone 16, portable information terminal 17, PC 19, and the like).

Therefore, not only the apparatus (digital broadcasting receiver 11) which has acquired the program information but also the peripheral device (cellular phone 16, portable information terminal 17, PC 19, and the like) can easily acquire the program information. Therefore, for example, the PC 19 edits/manages the program information, a printer or the like performs label printing, a program table is checked with the portable information terminal 17, and reservation for recording is made from acquired program data with the cellular phone 16. It is possible to effectively use the program information in this manner.

Moreover, the digital broadcasting receiver 11 can also be constituted to automatically transfer the acquired program information based on the content of the setting unit 26 every time the program information is received.

Furthermore, the digital broadcasting receiver 11 can also be constituted to transfer the displayed program information based on the content of the setting unit 26 by the user's operation, while the specific program information is displayed on the monitor 12.

Moreover, the digital broadcasting receiver 11 can also be constituted to transfer the program information corresponding to the selected program based on the content of the setting unit 26, when the predetermined program is selected from the program table displayed on the monitor 12 and the transfer operation is performed by EPG.

Furthermore, the digital broadcasting receiver 11 can also be constituted to automatically transfer the program information corresponding to the program based on the content of the setting unit 26, when the specific program is recorded.

Additionally, the digital broadcasting receiver 11 can also be constituted to automatically transfer the program information corresponding to the program based on the content of the setting unit 26, when the recording of the specific program is reserved.

Moreover, the digital broadcasting receiver 11 can also be constituted to automatically transfer the program information corresponding to the program based on the content of the setting unit 26, when the specific program is viewed/listened to.

Furthermore, the digital broadcasting receiver 11 can also be constituted to automatically transfer the program information corresponding to the program based on the content of the setting unit 26, when the viewing/listening to of the specific program is reserved.

## Claims

1. A digital broadcasting reception apparatus **characterized by** comprising:
an acquisition unit (22) configured to receive digital broadcasting and to acquire program information; and
a conversion unit (25) configured to convert the program information acquired by the acquisition unit (22) to a predetermined format.

2. A digital broadcasting reception apparatus according to claim 1, **characterized by** further comprising:
a recording unit (27) configured to record the program information converted by. the conversion unit (25) on an information recording medium (13 to 15).

3. A digital broadcasting reception apparatus according to claim 2, **characterized in that** the information recording medium (13 to 15) is attachable/detachable with respect to the digital broadcasting reception apparatus.

4. A digital broadcasting reception apparatus according to claim 3, **characterized in that** the information recording medium (13 to 15) includes either a memory device (13, 14) on which a semiconductor memory is mounted or a disk (15).

5. A digital broadcasting reception apparatus according to claim 1, **characterized by** further comprising:
a transfer unit (28) configured to transfer the program information converted by the conversion unit (25) to a predetermined address.

6. A digital broadcasting reception apparatus according to claim 5, **characterized in that** the transfer unit (28) transfers the program information by electronic mail.

7. A digital broadcasting reception apparatus according to claim 5, **characterized in that** a transfer destination of the program information by the transfer unit (28) includes any one of a cellular phone (16), portable information terminal (17), and personal computer (19).

8. A digital broadcasting reception apparatus according to claim 1, **characterized in that** the conversion unit (25) converts the program information to a predetermined format every time the acquisition unit (22) acquires the program information.

9. A digital broadcasting reception apparatus according to claim 1, **characterized in that** the conversion unit (25) converts the program information acquired by the acquisition unit (22) and displayed to the predetermined format based on a transfer request.

10. A digital broadcasting reception apparatus according to claim 1, **characterized in that** the conversion unit (25) converts the program information corresponding to a program selected from a program table prepared according to the program information acquired by the acquisition unit (22) and displayed in a list table to the predetermined format.

11. A digital broadcasting reception apparatus according to claim 1, **characterized in that** the conversion unit (25) automatically converts the program information corresponding to a program to the predetermined format when the digital broadcasting is received and the acquired program is recorded.

12. A digital broadcasting reception apparatus according to claim 1, **characterized in that** the conversion unit (25) automatically converts the program information corresponding to a program reserved to be recorded in programs to be digitally broadcast to the predetermined format.

13. A digital broadcasting reception apparatus according to claim 1, **characterized in that** the conversion unit (25) automatically converts the program information corresponding to a program to the predetermined format when the digital broadcasting is received and the acquired program is seen/heard.

14. A digital broadcasting reception apparatus according to claim 1, **characterized in that** the conversion unit (25) automatically converts the program information corresponding to a program reserved to be viewed/ listened to in programs to be digitally broadcast to the predetermined format.

15. A digital broadcasting reception apparatus **characterized by** comprising:
means for receiving digital broadcast and acquiring a program information;
means for converting the program information to a predetermined format;
means for recording the program information converted by means for converting the program information on an information recording medium (13 to 15); and
means for transferring the program information converted by means for converting the program information to a predetermined address.

16. A control method of a digital broadcasting reception apparatus, **characterized by** comprising:
receiving digital broadcasting to acquire program information;
allowing specific program information to be selected from the acquired program information;
setting a transfer destination of the selected program information; and
converting the program information whose transfer destination is set into a predetermined format.

17. A control method of a digital broadcasting reception apparatus according to claim 16, **characterized in that** the transfer destination of the program information includes either an information recording medium (13 to 15) or an external apparatus (16, 17, 19).
